# EUROPEAN PATENT SPECIFICATION

(11) **EP 0 805 077 B1**
(45) Date of publication and mention of the grant of the patent: **10.09.2003**
(21) Application number: 97104636.2
(22) Date of filing: 18.03.1997
(51) Int. Cl.: B60R 25/02

(54) **Vehicle main switch**
Fahrzeug-Hauptschaltgerät
Interrupteur principal d'un véhicule

(30) Priority: 27.03.1996 JP 7296796; 02.07.1996 JP 17269796
(43) Date of publication of application: 05.11.1997
(73) Proprietor: HONDA GIKEN KOGYO KABUSHIKI KAISHA, Minato-ku Tokyo (JP)
(72) Inventor: Yamashita, Akihiko, Wako-shi, Saitama (JP); Nakajima, Hiroyuki, Wako-shi, Saitama (JP)
(74) Representative: Liska, Horst, Dr.-Ing.

(56) References cited:
- EP-A- 0 269 584
- EP-A- 0 497 661
- EP-A- 0 546 945
- FR-A- 2 610 762
- US-A- 4 138 187
- PATENT ABSTRACTS OF JAPAN vol. 096, no. 009, 30 September 1996 & JP 08 135272 A (YAZAKI CORP), 28 May 1996

## Description

The present invention relates to a main switch of a vehicle according to the preamble of claim 1. A main switch according to the preamble of claim 1 is known from FR-A-26 10 762.

Furthermore, for a main switch of a vehicle, for example, Japanese published unexamined utility model application Sho54-5479, "Vehicle steering locking device" is known.

Fig. 1 of the above utility model application is shown as Fig. 14 in this specification. However, reference numbers are different.

Fig. 14 is a sectional view showing a conventional type vehicle steering locking device, a steering locking device 200 is provided with a switch box 201 in the lower part and provided with a switch member 203 turned together with a key 202 inside the switch box 201.

The switch member 203 is provided with a moving contact plate 204 and fixed contact plates 206 and 207 respectively attached to an insulating plate 205. These fixed contact plates 206 and 207 are fixed by riveting terminals 208 and 209. A reference number 211 denotes a coupler.

As force in the direction shown by an arrow operates upon the terminals 208 and 209 and this force is applied to each riveted portion of the fixed contact plates 206 and 207 when another coupler C provided with a female terminal is repeatedly inserted and extracted into/from the coupler 211 in the direction shown by the arrow, this portion is readily rattled.

In such a case, to maintain electric connection respectively between terminals 208 and 209 and the fixed contact plates 206 and 207, for example there is a method in which a set of the terminal 208 and the fixed contact plate 206 and a set of the terminal 209 and the fixed contact plate 207 are respectively soldered, however, there is a problem that quality control for preventing the resin insulating plate 205 from being deformed or softened by heat generated in soldering is difficult.

Further, there is a problem that the performance of assembly is deteriorated by a method of fixing by the above riveting and soldering because the terminals 208 and 209 and the fixed contact plates 206 and 207 are separate parts.

The object of the present invention is to provide the main switch of a vehicle in which a terminal and a fixed contact are integrated, which is readily fixed, the cost of which is reduced and which is hardly rattled.

In order to achieve the above-mentioned object, the present invention proposes a main switch of a vehicle according to claim 1.

According to Claim 1 of the present invention, a terminal pierces an insulating plate, a contact section is provided inside the insulating plate and a terminal section is provided outside the insulating plate.

As the contact section and the terminal section can be integrated, the terminal can be readily assembled and the number of parts can be reduced.

The present invention produces the following effect by the above constitution.

As in a main switch for a vehicle according to Claim 1, a terminal pierces an insulating plate, a contact section is provided inside the insulating plate and a terminal section is provided outside the insulating plate, the contact section and the terminal section can be integrated, the terminal can be readily attached, the number of parts can be reduced and the cost can be reduced.

Furthermore, the terminal described in Claim 1 is fixed to the insulating plate by press fitting.

The terminal can be readily and securely fixed to the insulating plate and is hardly rattled and disconnection is hardly caused.

Furthermore, a band plate is used for the terminal section, this band plate is surrounded by a cover, the entry for a wiring coupler is provided to this cover and this entry is opposite to one side end face of the band plate.

When a wiring coupler is inserted into the entry, force operates from the direction opposite to the side end face of the terminal section, however, as this force is supported in the direction of the width of the terminal section, the terminal section is hardly bent and can be prevented from being rattled.

As force from the direction opposite to the side end face of a terminal section is supported in the direction of the width of the terminal section when a wiring coupler is inserted into an entry because in a main switch a band plate is used for the terminal section, this band plate is surrounded by a cover, the entry for the wiring coupler is provided to this cover and this entry is opposite to one side end face of the band plate, the terminal section is hardly bent and a terminal can be prevented from being rattled.

Preferably, a main switch comprises a lock external cylinder attached to the body, a crankshaft housed in this lock external cylinder, a lock pin deposited and withdrawn by this crankshaft, a moving member fitted to the lower part of the crankshaft so that the member can be attached or detached, a terminal which comes in contact with a moving contact attached to this moving member, sliding, an insulating plate for supporting this terminal, a cover for covering the lower part of the terminal which pierces this insulating plate, an entry for a wiring coupler provided to this cover and plural machine screws for fitting the cover and the insulating plate in the lock external cylinder, and the moving member is fitted to the crankshaft so that the moving member, the insulating plate and the cover can be turned by a predetermined angle in the direction of the rotation of the crankshaft together in a state in which these machine screws are unfastened and the moving member is detached from the crankshaft.

The direction in which a wiring coupler is inserted can be varied depending upon a model by a set of a moving member, an insulating plate and a cover, the moving member, the insulating plate and the cover of the type corresponding to the direction of insertion are not required to be prepared and the costs for manufacturing and management can be reduced.

As a main switch comprises a lock external cylinder attached to the body, a crankshaft housed in this lock external cylinder, a lock pin reciprocated by this crankshaft, a moving member fitted to the lower part of the crankshaft so that the moving member can be attached or detached, a terminal which comes in contact with a moving contact attached to this moving member, sliding, an insulating plate for supporting this terminal, a cover for surrounding the lower part of the terminal which pierces this insulating plate, an entry for wiring coupler provided to this cover and plural machine screws for fitting the cover and the insulating plate to the lock external cylinder and the moving member is engaged with the crankshaft so that the moving member, the insulating plate and the cover can be turned integrally by a predetermined angle in the direction of the rotation of the crankshaft in a state in which these machine screws are unfastened and the moving member is detached from the crankshaft, the direction in which the wiring coupler is inserted can be varied depending upon a model by a set of one type of a moving member, an insulating plate and a cover, the respective types of a moving member, an insulating plate and a cover depending upon the direction of insertion are not required to be prepared and the costs for manufacturing and management can be reduced.

Preferably, a terminal pierces an insulating plate, a contact section is provided inside the insulating plate and a terminal section is provided outside the insulating plate.

As the contact section and the terminal section can be integrated, the terminal can be readily attached, the number of parts can be reduced and the cost can be further reduced in addition to the reduction of the costs for manufacturing and management of various types of moving members, insulating plates and covers.

As in a main switch a contact section and a terminal section can be integrated by piercing a terminal by an insulating plate, providing the contact section inside the insulating plate and providing the terminal section outside the insulating plate, the terminal can be readily attached, the number of parts can be reduced and the cost can be further reduced in addition to the reduction of the costs for manufacturing and managing the respective types of the moving member, the insulating plate and the cover.

Preferably, a cover is constituted by an end section, an external wall section rising from the periphery of this end section, an internal wall section for covering the lower part of the terminal and an entry, and when the entry is turned downward, a drain hole for space between the internal and external wall sections is formed in the lower location.

As a contact section and a terminal section can be integrated, a terminal can be readily attached, the number of parts can be reduced, water in space between the internal and external wall sections is discharged from the drain hole and the terminal is not damaged by water.

As in a main switch a contact section and a terminal section can be integrated because a cover is constituted by an end section, an external wall section rising from the periphery of this end section, an internal wall section for surrounding the lower part of a terminal and an entry, and a drain hole is provided in the lower location in space between the internal and external wall sections when the entry is turned downward, the terminal can be readily attached, the number of parts can be reduced, water in space between the internal and external wall sections can be discharged from the drain hole, the terminal can be prevented from being damaged by the water and the reliability of the main switch can be enhanced.

### Preferred Embodiments of the Invention

The embodiments of the present invention will be described below referring to the attached drawings. The drawings are to be viewed in the direction shown by reference numbers.

### BRIEF DESCRIPTION OF THE DRAWINGS

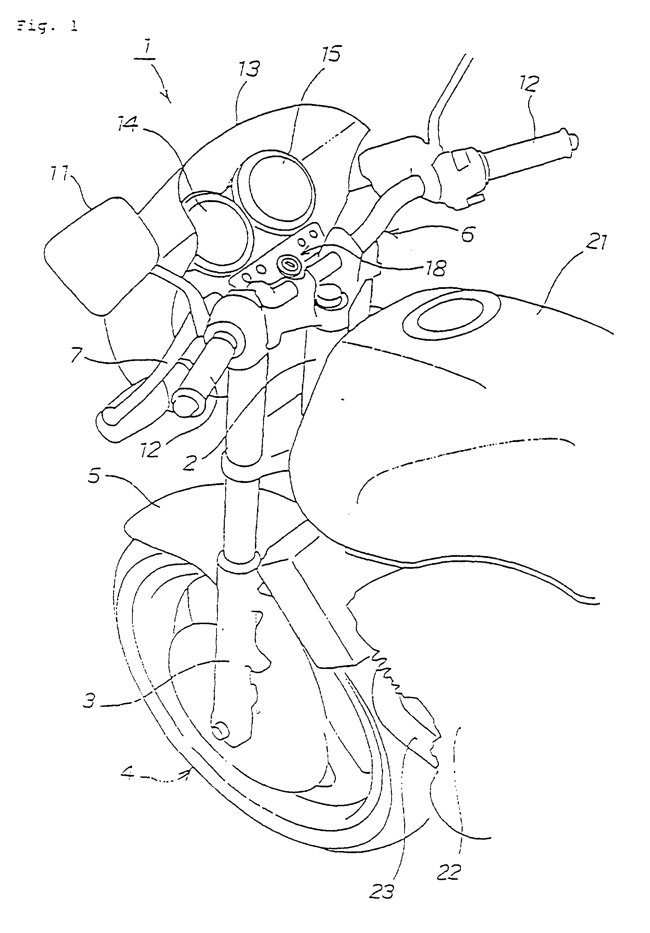

Fig. 1 is a perspective drawing showing the front of a motorcycle provided with a main switch according to the present invention;

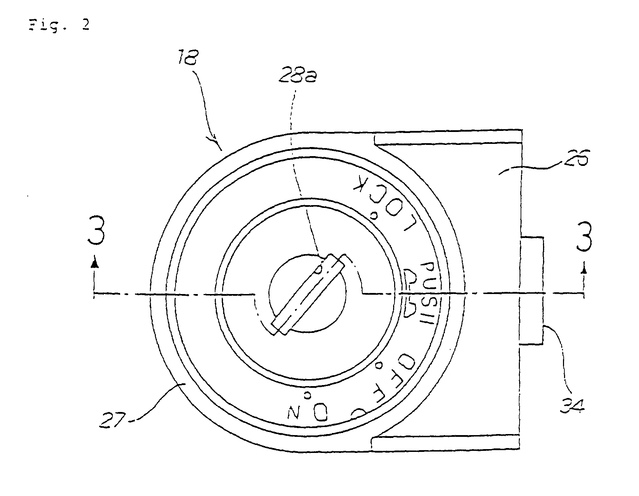

Fig. 2 is a plan showing a first embodiment of the main switch according to the present invention;

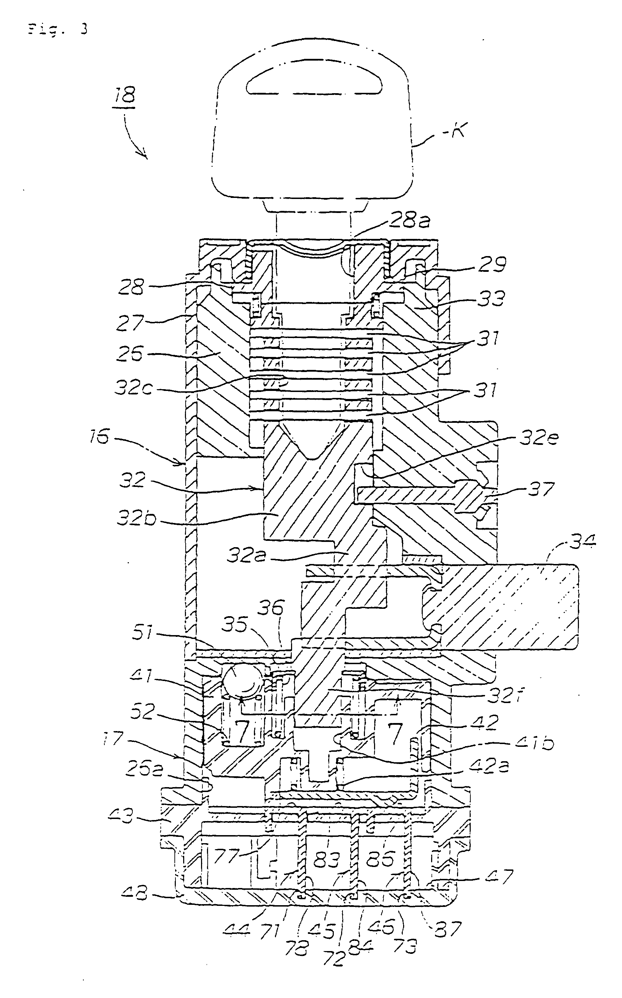

Fig. 3 is a sectional view along a line 3-3 in Fig. 2;

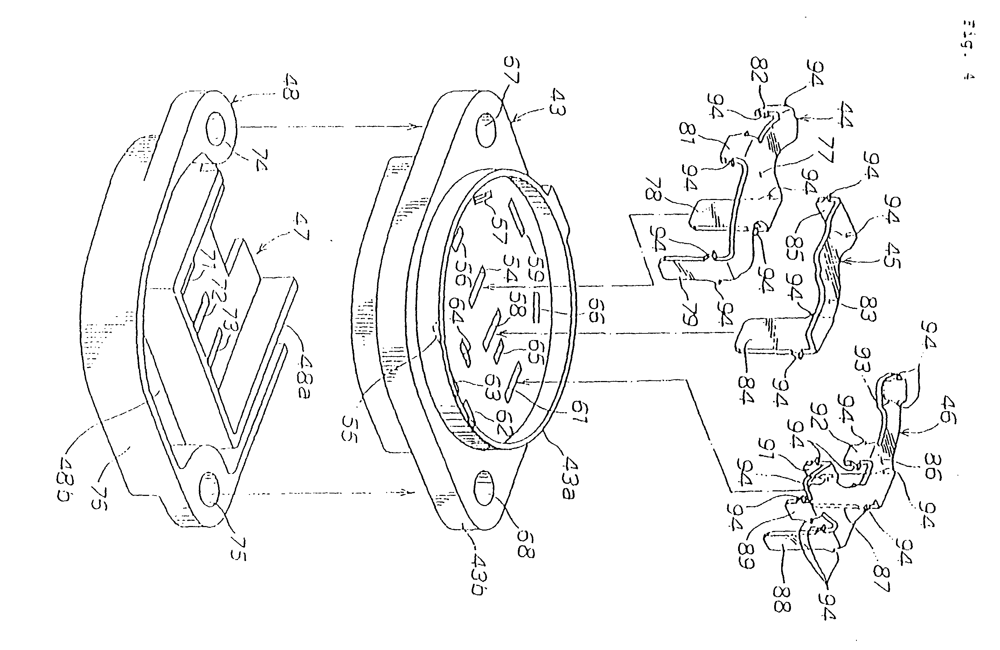

Fig. 4 is an exploded perspective drawing (in a first embodiment) showing the part in which a terminal is attached of the main switch according to the present invention;

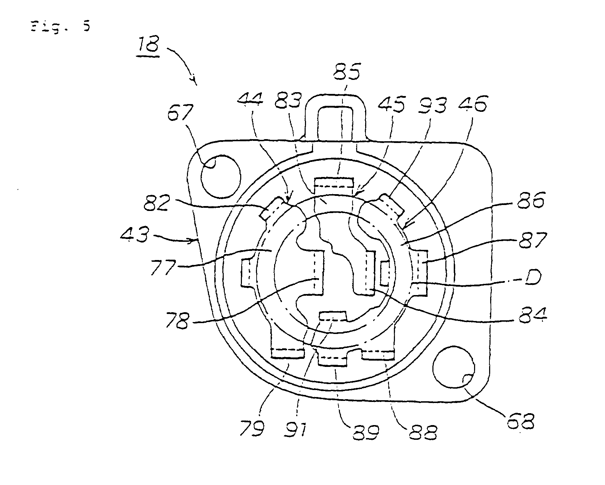

Fig. 5 is a plan (in the first embodiment) showing a state in which the terminal is attached of the main switch according to the present invention;

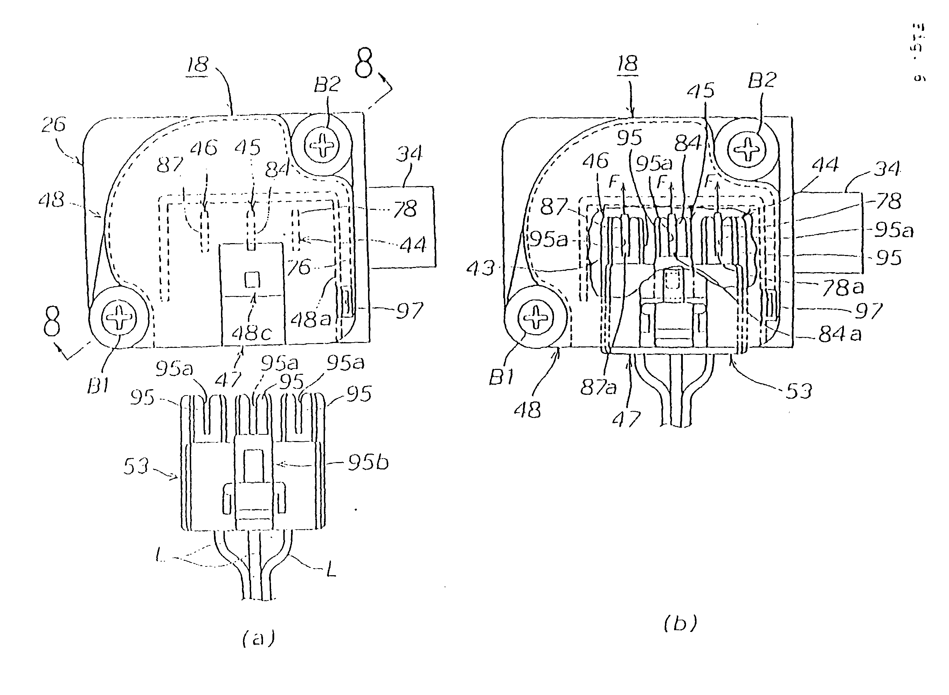

Figs. 6 are bottom views (in the first embodiment) for explaining the connection of a wiring coupler to the main switch according to the present invention;

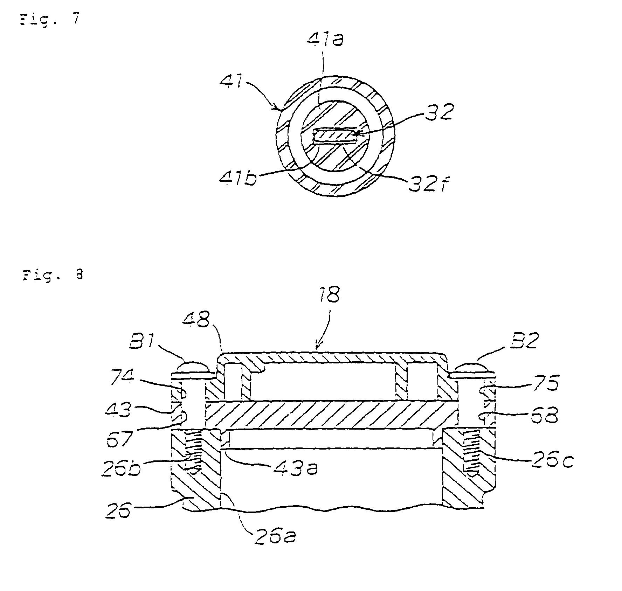

Fig. 7 is a sectional view along a line 7-7 in Fig. 3;

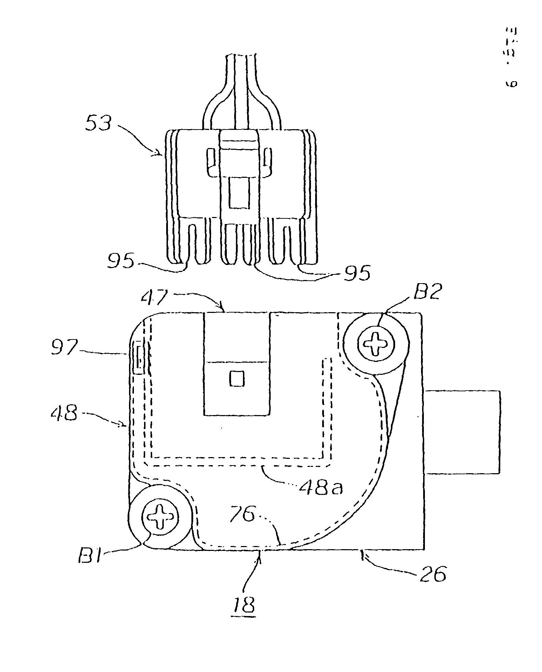

Fig. 8 is a sectional view along a line 8-8 in Fig. 6 (a);

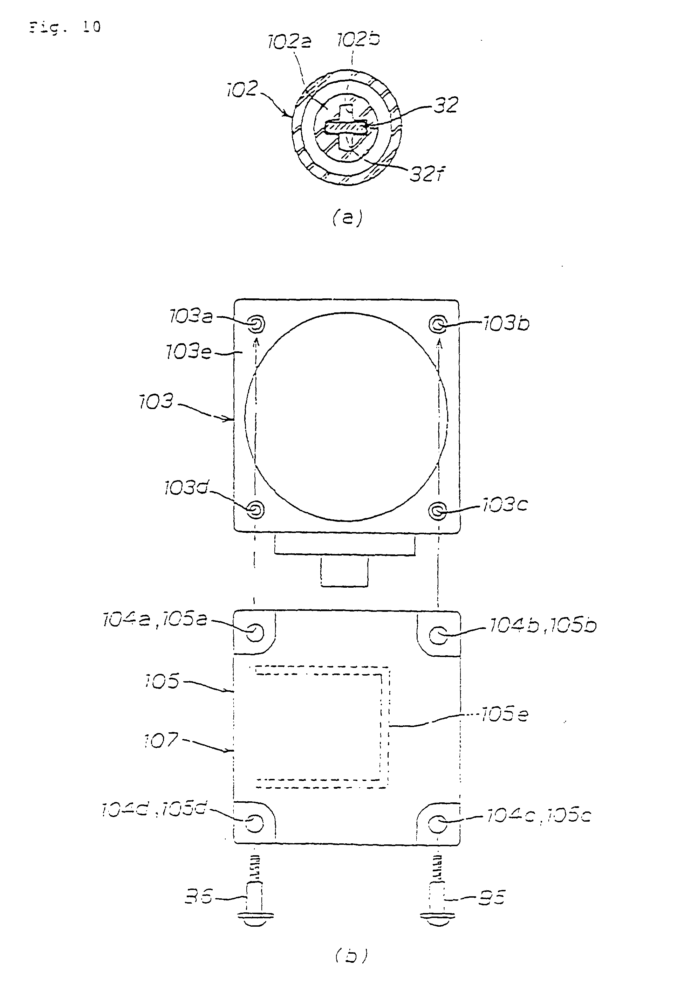

Fig. 9 is a bottom view (in the first embodiment) showing an example in which the position of an entry for a wiring coupler according to the present invention is changed;

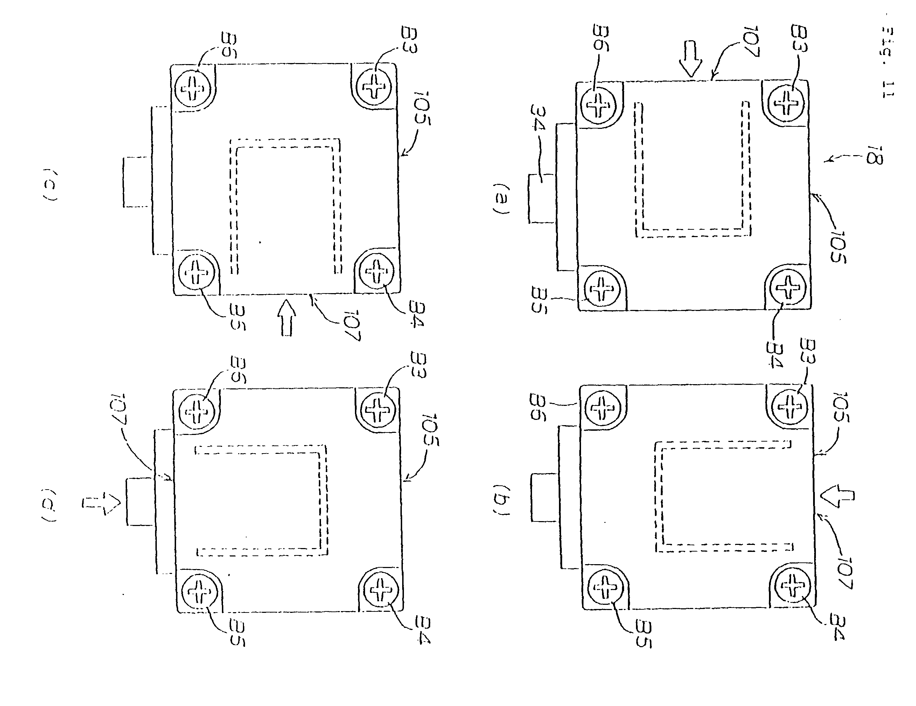

Figs. 10 are explanatory drawings for explaining a second embodiment of a main switch according to the present invention;

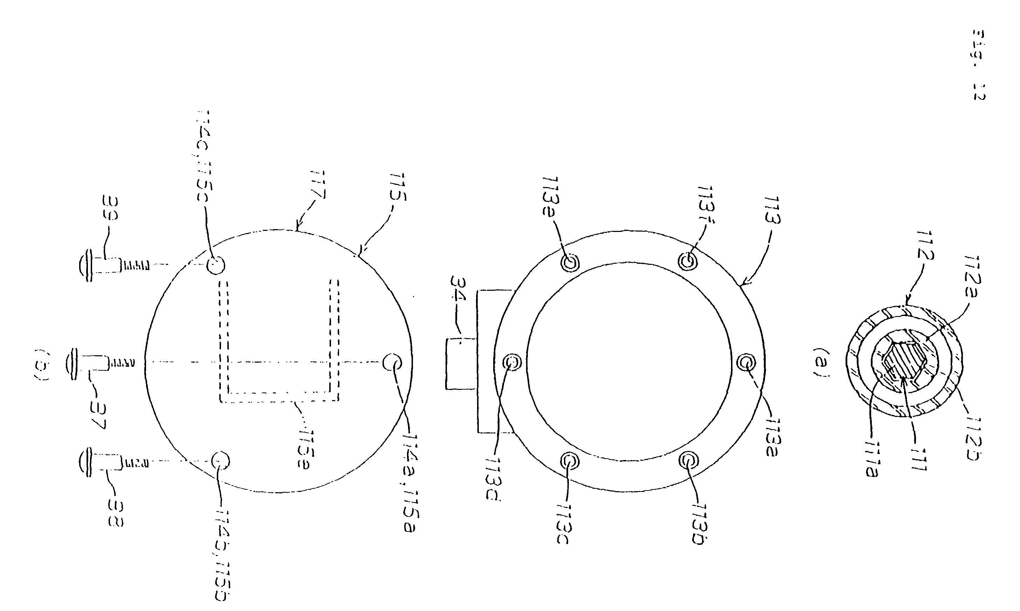

Figs. 11 are explanatory drawings for explaining the change of the direction of the entry equivalent to the second embodiment of the main switch according to the present invention;

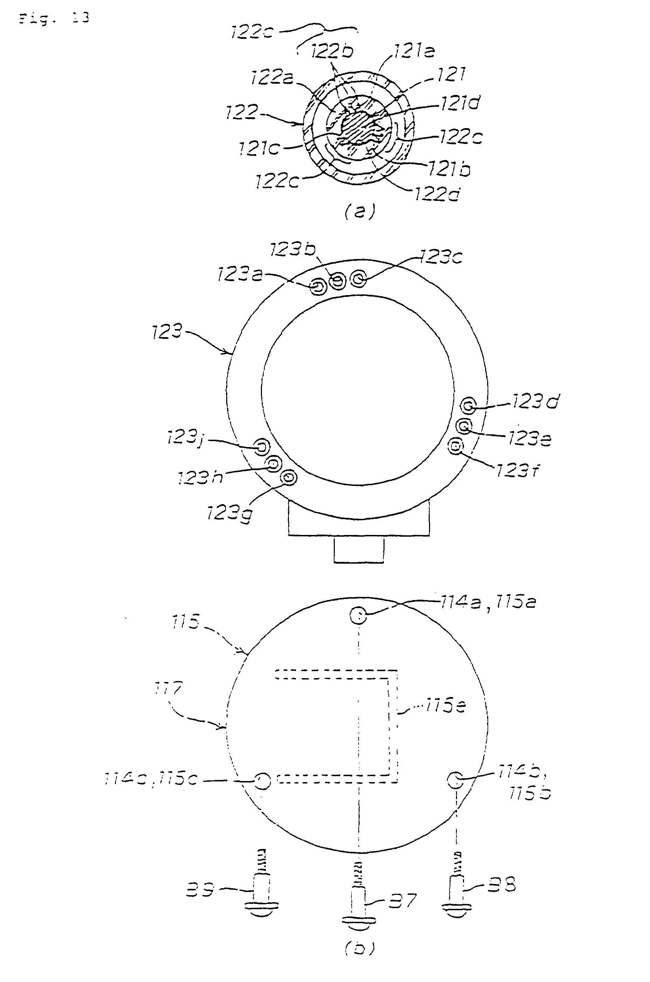

Figs. 12 are explanatory drawings for explaining a third embodiment of a main switch according to the present invention;

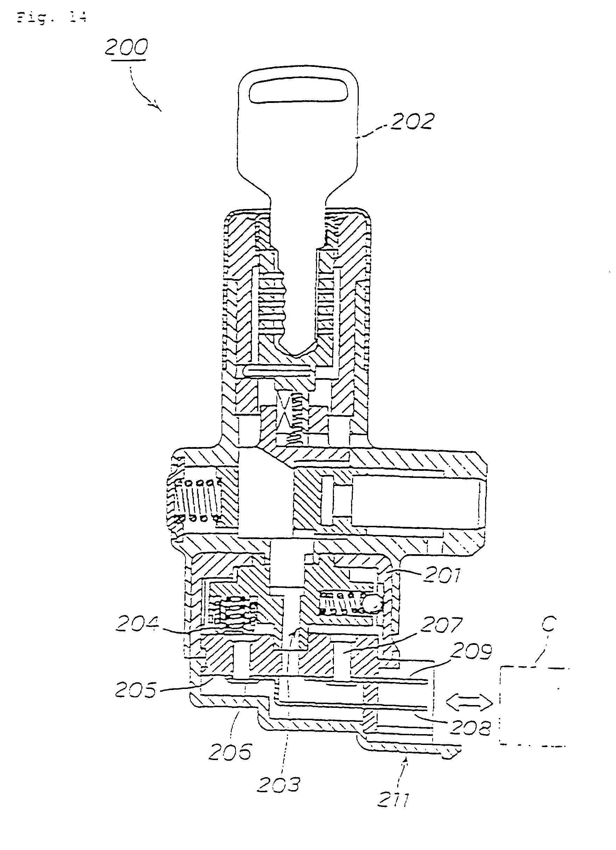

Figs. 13 are explanatory drawings for explaining a fourth embodiment of a main switch according to the present invention; and
Fig. 14 is a sectional view showing a steering locking device of a conventional type of vehicle.

Fig. 1 is a perspective drawing showing the front of a motorcycle provided with a main switch according to the present invention and the motorcycle 1 is provided with a steering head 2 attached to the front of a frame not shown, a front fork 3 attached to this steering head 2 via a handle post not shown so that the front fork can be turned, a front tire 4 provided with a wheel attached to the end of this front fork 3, a front fender 5 covering the upper part of this front tire 4, a handle 6 for integrally turning the front fork 3, a clutch lever 7 attached on the right and left sides of this handle 6, a front brake lever not shown, rear-view mirrors 11 (the right one is not shown) and grips 12 respectively attached at the right and left ends of the handle 6.

Further, the motorcycle 1 is provided with a windshield 13, a speedometer 14, a tachometer 15 and a main switch 18 respectively attached to the front of the steering head 2, a fuel tank 21 attached to the upper part of a frame at the back of the steering head 2, an engine 22 attached to the frame under this fuel tank 21 and an exhaust pipe 23 pulled out from the front of this engine 22.

Fig. 2 is a plan showing a first embodiment of the main switch according to the present invention and the main switch 18 is provided with a key hole 28a and marks such as OFF, ON showing a position in which a key K shown in Fig. 3 is turned, PUSH and LOCK on the upper surface.

When a key is in the position of OFF, the engine 22 shown in Fig. 1 is in a stopped state and the handle 6 is in an unlocked state. The key K can be inserted into the key when the key is in this position.

When the key K is turned to ON, the engine 22 is in a state in which it can be started. When a starter switch is turned on, the engine is started. The handle 6 is naturally in an unlocked state.

Fig. 3 is a sectional view viewed along a line 3-3 shown in Fig. 2 and the main switch 18 consists of a handle locking section in the upper part and an ignition switch 17 in the lower part.

The handle locking section 16 consists of a lock external cylinder 26 attached to the body, a cover 27 covering this lock external cylinder 26, a protector block 28 housed above the lock external cylinder 26 so that the protector block can be turned and vertically moved and on which the key hole 28a is formed and a coil spring 29 for pressing up this protector block 28.

The handle locking section 16 also consists of a crankshaft 32 housed under this protector block 28 so that the crankshaft can be turned and vertically moved and provided with tumblers 31 taken into a linear section 32b by inserting a key K into a key inserting hole 32c of the linear section 32b over a crank 32a, a lock pin 34 which is locked or unlocked by the crank 32a of this crankshaft 32, a coil spring 36 for pressing up the crankshaft 32 via a retainer 35 and a control pin 37 fixed to the lock external cylinder 26 the end of which is inserted into a cam groove 32e formed on the side of the crankshaft 32 for controlling the vertical motion and turning of the crankshaft 32.

The ignition switch 17 consists of a resin moving part 41 as a moving member housed under the lock external cylinder 26 so that the part can be turned together with the crankshaft 32, a moving contact 42 attached to the lower part of this moving part 41, a coil spring 42a for pressing down this moving contact 42, an insulating plate 43 attached to the lower part of the lock external cylinder 26, a first terminal 44, a second terminal 45 and a third terminal 46 which are press-fitted into this insulating plate 43, fixed and touched to the moving contact 42.

The ignition switch 17 also consists of a resin cover 48 attached to the insulating plate 43 for covering the first, second and third terminals 44, 45 and 46 which forms an entry 47 for inserting a wiring coupler 53 shown in Fig. 6 together with the insulating plate 43. A reference number 51 denotes a ball for positioning the moving part 41 and 52 denotes a coil spring for pressing the ball 51.

Fig. 4 is an exploded perspective drawing (a first embodiment) showing a terminal attachment part of the main switch according to the present invention and the insulating plate 43 is provided with a cylinder section 43a for engaging with the inside 26a of the lock external cylinder 26 shown in Fig. 3, through slots 54, 55, 56, 57, 58, 59, 61, 62, 63, 64, 65 and 66 provided inside the cylinder section 43a for attaching the first, second and third terminals 44, 45 and 46 and a flange 43b protruded outside the cylinder section 43a. Reference numbers 67 and 68 denote mounting holes for attaching the insulating plate to the lock external cylinder 26.

The cover 48 is provided with an internal wall section 48a rising on the side to which the insulating plate 43 is attached, grooves 71, 72 and 73 provided inside this internal wall section 48a, an external wall section 76 for surrounding the internal wall section 48a and an end section 48b. Reference numbers 74 and 75 are mounting holes for attaching the cover to the lock external cylinder 26 together with the insulating plate 43.

The cover 48 forms the entry 47 for inserting a wiring coupler 42 described later and shown in Fig. 6 together with the insulating plate 43.

The first terminal 44 consists of a contact section 77 with which the moving contact 42 shown in Fig. 3 comes in contact, sliding, a terminal section 78 bent perpendicularly to this contact section 77 and holding sections 79, 81 and 82.

The second terminal 45 consists of a contact section 83 with which the moving contact 42 comes in contact, sliding, a terminal section 84 bent perpendicularly to this contact section 83 and a holding section 85.

The third terminal 46 consists of a contact section 86 with which the moving contact 42 comes in contact, sliding, a terminal section 87 bent perpendicular to this contact section 86 and holding sections 88, 89, 91, 92 and 93. A reference number 94 is a fitting portion for preventing falling.

It is desirable that the first, second and third terminals 44, 45 and 46 are stamped.

To attach the first terminal 44 to the insulating plate 43, first the terminal section 78 of the first terminal 44 is inserted into the through slot 54, the holding section 79 is inserted into the through slot 55, the holding section 81 is inserted into the through slot 56, the holding section 82 is inserted into the through slot 57, next the fitting portions 94 of the terminal section 78 and the holding sections 79, 81 and 82 are press-fitted so that they respectively bite the inner faces of the through slots 54, 55, 56 and 57. Hereby, the first terminal 44 is completely fixed to the insulating plate 43.

To attach the second terminal 45 to the insulating plate 43, first the terminal section 84 of the second terminal 45 is inserted into the through slot 58, the holding section 85 is inserted into the through slot 59, next the fitting portions 94 of the terminal section 84 and the holding section 85 are press-fitted so that they respectively bite the inner faces of the through slots 58 and 59. Hereby, the second terminal 45 is completely fixed to the insulating plate 43.

To attach the third terminal 46 to the insulating plate 43, first the terminal section 87 of the third terminal 46 is inserted into the through slot 61, the holding section 88 is inserted into the through slot 62, the holding section 89 is inserted into the through slot 63, the holding section 91 is inserted into the through slot 64, the holding section 92 is inserted into the through slot 65, the holding section 93 is inserted into the through slot 66, next the fitting portions 94 of the terminal section 87 and the holding sections 88, 89, 91, 92 and 93 are press-fitted so that they respectively bite the inner faces of the through slots 61, 62, 63, 64, 65 and 66. Hereby, the third terminal 46 is completely fixed to the insulating plate 43.

Each end of the terminal sections 78, 84 and 87 of the first, second and third terminals 44, 45 and 46 is also inserted into the grooves 71, 72 and 73 of the cover 48. Therefore, both ends of each terminal section 78, 84 and 87 are supported by the insulating plate 43 and the cover 48 and each terminal section is hardly bent by external force.

Fig. 5 is a plan (the first embodiment) showing a state in which the terminal of the main switch according to the present invention is attached and when the first to third terminals 44 to 46 are attached to the insulating plate 43, the contact sections 77, 83 and 86 of the first to third terminals 44 to 46 substantially form a doughnut D in all and this doughnut D comes in contact with the moving contact 42 shown in Fig. 3, sliding.

As the first terminal 44 is fixed by the terminal section 78 and the holding sections 79 and 82 which are different in the direction as shown in Fig. 5, the first terminal 44 is not rattled vertically even if force is applied to the terminal section 78 from over the entry 47 shown in Fig. 4.

Similarly as the second terminal 45 is fixed by the terminal section 84 and the holding section 85 which are different in the direction, the second terminal 45 is not rattled vertically even if force is applied to the terminal section 84 from over the entry 47 shown in Fig. 4.

Similarly as the third terminal 46 is fixed by the terminal section 87 and the holding sections 88, 89, 91 and 93 which are different in the direction, the third terminal 46 is not rattled vertically even if force is applied to the terminal section 87 from over the entry 47 shown in Fig. 4.

The operation in the first embodiment of the main switch described above will be described below.

Figs. 6 (a) and (b) are bottom views (the first embodiment) for explaining the connection of a wiring coupler to the main switch according to the present invention, Fig. 6 (a) shows a state before a wiring coupler is inserted and Fig. 6 (b) shows a state after a wiring coupler is inserted.

As shown in Fig. 6 (a), the wiring coupler 53 is provided with terminals 95 respectively connected to lead wires L lead from the body and each terminal 95 is provided with a grip 95a for respectively connecting to the first to third terminals 44 to 46 of the main switch 18. A reference number 95b denotes a fitting portion for preventing the coupler 53 from falling by fitting to the fitted portion 48c provided to the cover 48 and reference characters B1 and B2 denote machine screws for attaching the insulating plate 43 and the cover 48 to the lock external cylinder 26.

The cover 48 is provided with a drain hole 97 for discharging water in the cover 48.

When the main switch 18 is attached to the body so that the entry 47 for the wiring coupler 53 is turned downward, the drain hole 97 is formed in the lower location in space between the internal wall section 48a and the external wall section 76 of the cover 48.

Rainwater flowing between the internal wall section 48a and the external wall section 76 is discharged from this drain hole 97 by providing the drain hole 97 as described above and each terminal 44, 45 and 46 is prevented from being damaged by such rainwater.

As shown in Fig. 6 (b), when the wiring coupler 53 is inserted into the entry 47 formed by the insulating plate 43 and the cover 48, the grip 95a of each terminal 95 is pressed outside respectively by the terminal sections 78, 84 and 87 of the first to third terminals 44 to 46 and elastically deformed, and each grip 95a is respectively connected to the terminal sections 78, 84 and 87 by return force by elastic deformation at this time.

While the coupler is inserted, reaction force F by friction generated by return force by the above elastic deformation between each of the terminal sections 78, 84 and 87 and the grip 95a is generated as shown by arrows.

In Fig. 3, reaction force F operates the terminal sections 78, 84 and 87 in the direction perpendicular to the surface of the drawing, however, as the first to third terminals 44 to 46 are respectively integrated and fixed by pressfitting, further the end of the terminal sections 78, 84 and 87 is respectively inserted into the grooves 71, 72 and 73 of the cover 48 and each terminal is respectively inserted opposite to the side end faces 78a, 84a and 87a of the terminal sections 78, 84 and 87 as shown in Fig. 6 (b), the terminals are securely fixed and hardly rattled.

Fig. 7 is a sectional view viewed along a line 7-7 in Fig. 3 and the moving part 41 is provided with a boss section 41a formed in the center and a minus sign-shaped groove 41b on the upper surface of this boss section 41a.

The moving part 41 is turned together with the crankshaft 32 by engaging the minus sign-shaped groove 41b with a minus sign-shaped end 32f formed at the lower end of the crankshaft 32.

Fig. 8 is a sectional view viewed along a line 8-8 shown in Fig. 6 (a) and to attach the insulating plate 43 and the cover 49 to the lock external cylinder 26, first, the cylinder section 43a of the insulating plate 43 is fitted to the inside of the lock external cylinder 26.

Next, the cover 48 is arranged outside the insulating plate 43 and the machine screws B1 and B2 are respectively inserted into the mounting holes 74 and 75 of the cover, the mounting holes 67 and 68 of the insulating plate 43 and the female screws 26b and 26c of the lock external cylinder 26 and fastened to fix the insulating plate 43 and the cover 48 to the lock external cylinder 26. Other fastening members such as screws and bolts can be used instead of machine screws B1 and B2. It is obvious that rivets can also be used as the fastening members because, once the main switch is suitably riveted to a specific vehicle, there is no need to remove the switch or to change the direction of the socket of the wiring coupler. Rivets can therefore be used instead of the machine screws if they are set to an angle suitable for a specific vehicle and mass-produced for the vehicles.

Fig. 9 is a bottom view (the first embodiment) showing an example in which the direction of the entry for a wiring coupler according to the present invention is changed and the entry 47 of the wiring coupler 53 is turned by 180° based upon the entry shown in Fig. 6 (a).

To turn the position of the entry 47 by 180° , first, the machine screws B1 and B2 are unfastened and the cover 48 and the insulating plate 43 are detached from the lock external cylinder 26 in the state shown in Fig. 6 (a)(see Fig. 8).

Next, the moving part 41 shown in Fig. 3 is extracted from the crankshaft 32, is turned by 180° and again similarly as shown in Fig. 7, the minus sign-shaped groove 41b is fitted to the minus sign-shaped end 32f.

Next, reversely to attachment shown in Fig. 8, the insulating plate 43 and the cover 48 are turned by 180° and the machine screw B1 is inserted into the mounting hole 68 of the insulating plate 43, the mounting hole 75 of the cover 48 and the female screw 26b of the lock external cylinder 26.

The machine screw B2 is inserted into the mounting hole 67 of the insulating plate 43, the mounting hole 74 of the cover 48 and the female screw 26c of the lock external cylinder 26 and the machine screws B1 and B2 are fastened.

Hereby, the change of the direction of the entry 47 is completed as shown in Fig. 9.

At this time, the main switch 18 is attached to the body so that the entry is turned downward.

As described above, as the entry 47 for the wiring coupler 53 can be readily turned by 180° by engaging the minus sign-shaped groove 41b of the moving part 41 with the minus sign-shaped end 32f of the crankshaft 32 shown in Fig. 3 and attaching the insulating plate 43 and the cover 48 to the lock external cylinder 26 by the two machine screws B1 and B2 shown in Fig. 9 and the direction of the entry can be selected depending upon the model of a vehicle, the types which are different in the direction of the entry of the insulating plate and the cover are not required to be prepared and the manufacturing and management costs of the types can be reduced.

Rainwater flowing between the internal wall section 48a and the external wall section 76 is discharged from the drain hole 97 by turning the entry 47 downward and each terminal 44, 45 and 46 can be prevented from being damaged by the rainwater.

Figs. 10 (a) and (b) are explanatory drawings showing a second embodiment of a main switch according to the present invention, Fig. 10 (a) is a sectional view in the same position as that in Fig. 7 showing a state in which a moving part and a crankshaft are fitted and Fig. 10 (b) is a bottom view showing a state in which an insulating plate and a cover are attached to a lock external cylinder. The same reference numbers are allocated to the same components as those in the first embodiment and the detailed description of them is omitted.

As shown in Fig. 10 (a), a moving part 102 is provided with a plus sign-shaped groove 102b on the end face of the boss section 102a and this plus sign-shaped groove 102b and the minus sign-shaped end 32f of the crankshaft 32 are fitted.

Hereby, the moving part 102 can be fitted to the crankshaft 32 by turning the moving part based upon the crankshaft 32 by 90° per once.

As shown in Fig. 10 (b), a lock external cylinder 103 is provided with female screws 103a, 103b, 103c and 103d at the corners of the mounting face 103e of the insulating plate 104 not shown.

The insulating plate 104 (located on the rear side and not shown) and the cover 105 are respectively provided with mounting holes 104a, 104b, 104c, 104d, 105a, 105b, 105c and 105d at the respective four corners.

The cover 105 forms an entry 107 for inserting a wiring coupler 53 shown in Fig. 9 together with the insulating plate 104 on the side of the opening of a C-shaped internal wall section 105e.

To attach the insulating plate 104 and the cover 105 to the lock external cylinder 103, a machine screw B3 not shown is inserted into the mounting holes 104a and 105a of the insulating plate 104 and the cover 105, this machine screw B3 is driven into the female screw 103a of the lock external cylinder 103, similarly a machine screw B4 not shown is inserted into the mounting holes 104b and 105b, this machine screw B4 is driven into the female screw 103b, a machine screw B5 is inserted into the mounting holes 104c and 105c, this machine screw B5 is driven into the female screw 103c, a machine screw B6 is inserted into the mounting holes 104d and 105d and this machine screw B6 is driven into the female screw 103d.

Further, to turn the position of the entry 107 clockwise by 90° per once, the insulating plate 104 and the cover 105 have only to be turned clockwise by 90° per once integrally based upon the lock external cylinder 103. When the insulating plate 104 and the cover 105 are integrally turned, the above moving part 102 is also turned by the same angle.

Figs. 11 are explanatory drawings for explaining the change of the direction of the entry in the second embodiment of the main switch according to the present invention.

Fig. 11 (a) shows a case that the entry 107 of the wiring coupler 53 shown in Fig. 9 is provided on the left side of the drawing and the wiring coupler is inserted from the direction shown by an arrow.

Fig. 11 (b) shows a case that the entry 107 is provided in the upper part of the drawing and the wiring coupler 53 is inserted from the direction shown by an arrow.

Fig. 11 (c) shows a case that the entry 107 is provided on the right side of the drawing and the wiring coupler 53 is inserted from the direction shown by an arrow.

Fig. 11 (d) shows a case that the entry 107 is provided in the lower part of the drawing and the wiring coupler 53 is inserted from the direction shown by an arrow.

Figs. 12 (a) and (b) are explanatory drawings for explaining a third embodiment of the main switch according to the present invention, Fig. 12 (a) is a sectional view in the same position as that in Fig. 7 showing a state in which a moving part and a crankshaft are fitted and Fig. 12 (b) is a bottom view showing a state in which an insulating plate and a cover are attached to a lock external cylinder.

As shown in Fig. 12 (a), the crankshaft 111 is provided with a hexagonal end 111a at the lower end.

The moving part 112 is provided with a hexagonal hole 112b on the end face of a boss section 112a and this hexagonal hole 112b and the hexagonal end 111a of the crankshaft 111 are fitted.

Hereby, the moving part 112 is turned by 90° per once based upon the crankshaft 111 and they can be fitted.

As shown in Fig. 12 (b), the lock external cylinder 113 is provided with female screws 113a, 113b, 113c, 113d, 113e and 113f at an equal interval in the periphery of the attachment face of the insulating plate 114 not shown.

The insulating plate 114 (on the rear side) and the cover 115 are respectively provided with mounting holes 114a, 114b and 114c and mounting holes 115a, 115b and 115c at an equal interval in the periphery of them in the same pitch as that between the female screws of the lock external cylinder 113.

The cover 115 forms an entry 117 for inserting the wiring coupler 53 shown in Fig. 9 on the side of the opening of a C-shaped internal wall section 115e together with the insulating plate 114.

To attach the insulating plate 114 and the cover 115 to the lock external cylinder 113, a machine screw B7 is inserted into the mounting holes 114a and 115a of the insulating plate 114 and the cover 115, this machine screw B7 is driven into the female screw 113a of the lock external cylinder 113, similarly a machine screw B8 is inserted into the mounting holes 114b and 115b, this machine screw B8 is driven into the female screw 113c, a machine screw B9 is inserted into the mounting holes 114c and 115c and this machine screw B9 is driven into the female screw 113e.

To turn the position of the above entry 117 by 60° clockwise, the insulating plate 114 and the cover 115 have only to be turned by 60° clockwise integrally based upon the lock external cylinder 113.

That is, the machine screw B7 is inserted into the mounting holes 114a and 115a of the insulating plate 114 and the cover 115, this machine screw B7 is driven into the female screw 113b of the lock external cylinder 113, similarly the machine screw B8 is inserted into the mounting holes 114b and 115b, this machine screw B8 is driven into the female screw 13d, the machine screw B9 is inserted into the mounting holes 114c and 115c and this machine screw B9 is driven into the female screw 113f.

Further, to turn the position of the entry 117 by 60° per once clockwise, the insulating plate 114 and the cover 115 have only to be turned integrally by 60° per once clockwise based upon the lock external cylinder 113. When the insulating plate 114 and the cover 115 are integrally turned, the above moving part 112 is also turned by the same angle.

Figs. 13 (a) and (b) are explanatory drawings for explaining a fourth embodiment of the main switch according to the present invention, Fig. 13 (a) is a sectional view in the same position that in Fig. 7 showing a state in which a moving part and a crankshaft are fitted and Fig. 13 (b) is a bottom view showing a state in which an insulating plate and a cover are attached to a lock external cylinder.

As shown in Fig. 13 (a), the crankshaft 121 is provided with an end provided with projections 121d on which three projections 121a, 121b and 121c are formed at an equal interval at the lower end.

The moving part 122 is provided with a hole provided with V-shaped grooves 122d where three groups 122c each of which consists of three V-shaped grooves 122b formed every 10° on the inner periphery of a boss section 122a are provided at an equal interval and this hole provided with V-shaped grooves 122d and the end provided with projections 121d of the crankshaft 121 are engaged.

Hereby, the moving part can be engaged with the crankshaft 121 by turning the moving part 122 by 10°, 20°, 120°, 130°, 140°, 240°, 250° or 260°.

As shown in Fig. 13 (b), the lock external cylinder 123 is provided with three female screws 123a, 123b and 123c formed every 10° on the periphery of the attachment face of the insulating plate 114 not shown, three female screws 123d, 123e and 123f formed far by 120° clockwise from these female screws 123a, 123b and 123c and three female screws 123g, 123h and 123i formed far by 120° clockwise from these female screws 123d, 123e and 123f.

To attach the insulating plate 114 (located on the rear side and not shown) and the cover 115 to the lock external cylinder 123, a machine screw B7 is inserted into the mounting holes 114a and 115a of the insulating plate 114 and the cover 115, this machine screw B7 is driven into the female screw 123c of the lock external cylinder 123, similarly a machine screw B8 is inserted into the mounting holes 114b and 115b, this machine screw B8 is driven into the female screw 123f, a machine screw B9 is inserted into the mounting holes 114c and 115c and this machine screw B9 is driven into the female screw 123i.

To turn the position of the above entry 117 by 10° counterclockwise, the insulating plate 114 and the cover 115 have only to be turned integrally by 10° counterclockwise based upon the lock external cylinder 123.

That is, the machine screw B7 is inserted into the mounting holes 114a and 115a of the insulating plate 114 and the cover 115, this machine screw B7 is driven into the female screw 123b of the lock external cylinder 123, similarly the machine screw B8 is inserted into the mounting holes 114b and 115b, this machine screw B8 is driven into the female screw 123e, the machine screw B9 is inserted into the mounting holes 114c and 115c and this machine screw B9 is driven into the female screw 123h.

Further, to turn the position of the entry 117 by 10° counterclockwise, the insulating plate 114 and the cover 115 have only to be turned integrally by 10° counterclockwise based upon the lock external cylinder 123.

To turn the initial position of the entry 117 by 120° clockwise, the insulating plate 114 and the cover 115 have only to be turned integrally by 120° clockwise based upon the lock external cylinder 123.

That is, the machine screw B7 is inserted into the mounting holes 114a and 115a of the insulating plate 114 and the cover 115, this machine screw B7 is driven into the female screw 123f of the lock external cylinder 123, similarly the machine screw B8 is inserted into the mounting holes 114b and 115b, this machine screw B8 is driven into the female screw 123i, the machine screw B9 is inserted into the mounting holes 114c and 115c and this machine screw B9 is driven into the female screw 123c.

Further, to turn the position of the entry 117 by 120° per once clockwise, the insulating plate 114 and the cover 115 have only to be turned integrally by 120° per once clockwise based upon the lock external cylinder 123. When the insulating plate 114 and the cover 115 are integrally turned, the above moving part 122 is also turned by the same angle.

The allowable turning of an entry for a wiring coupler according to the present invention is not limited to every 180°, every 120°, every 90°, every 60°, every 10° described above, it may be also every other angle, for example every 72° (enabled in five directions) and every 45° (enabled in eight directions) and is not required to be performed at an equal interval. In short, the position of an entry has only to be turned so that an angle at which a moving part is attached to a crankshaft and an angle at which an insulating plate and a cover are attached to a lock external cylinder are equal.

A main switch for a vehicle according to the present invention is not limited to a motorcycle in the embodiments and can be applied to a cycle car, an automobile, an electric motor car, a vehicle for work and others.

## Claims

1. A main switch for a vehicle of the type that a wiring coupler (53) is inserted onto a terminal (44,45,46) of the main switch, wherein:
said terminal (44,45,46) pierces an insulating plate (43,104,114);
a contact section (77,83,86) is provided on a first side of said insulating plate (43,104,114) and a terminal section (78,84,87) is provided on an opposite second side of said insulating plate (43,104,114),
**characterized in that**
said terminal (44,45,46) is fixed to the insulating plate (43,104,114) by pressfit, wherein a direction of contacting between said wiring coupler (53) and said terminal (44,45,46) is different from a piercing direction of said terminal (44,45,46) through said insulating plate (43,104,114), and wherein said terminal section (78,84,87) comprises a band plate which is covered by a cover (48,105,115), wherein said cover (48,105,115) provides an entry (47,107,117) for the wiring coupler (53) opposite to a side end face (78a,84a,87a) of said terminal section (78,84,87).

2. A main switch for a vehicle according to Claim 1, wherein:
said terminal (44,45,46) is supported in a lateral direction by said insulating plate (43,104,114).

3. A main switch for a vehicle according to Claim 1 or 2, wherein:
said cover (48) is provided with corresponding slots (71,72,73) formed in a base (48b) thereof for receiving and supporting in a lateral direction an end of said terminal (44,45,46) which extends through said insulating plate (43).

4. A main switch for a vehicle according to any of Claims 1 to 3, comprising:
a switch body;
a lock external cylinder (26,103,113,123) attached to said switch body;
a crankshaft (32) housed in this lock external cylinder (26,103,113,123);
a lock pin (34) deposited and withdrawn by this crankshaft (32);
a moving member (41,102,112,122) detachably fitted to a lower part of said crankshaft (32), said moving member (41,102,112,122) having a movable contact (42) which is slidingly contactable with said terminal (44,45,46) being supported by said insulating plate (43,104,114);
a cover (48,105,115) for covering a lower part of the terminal (44,45,46) which pierces said insulating plate (43,104,114);
an entry (47,107,117) for a wiring coupler (53) provided by said cover (48,105,115); and
plural fastening members (B1-B9) for fitting said cover (48,105,115) and insulating plate (43,104,114) in the lock external cylinder (26,103,113,123), wherein:
the moving member (41,102,112,122) is fitted to the crankshaft (32) so that the moving member (41,102,112,122), the insulating plate (43,104,114) and the cover (48,105,115) can be turned by a predetermined angle in the direction of the rotation of the crankshaft (32) together in a state in which said plural fastening members (B1-B9) are unfastened and the moving member (41,102,112,122) is detached from the crankshaft (32).

5. A main switch for a vehicle according to Claim 4, wherein:
said plural fastening members (B1-B9) are machine screws (B1-B9).

6. A main switch for a vehicle according to Claim 4 or 5, wherein:
said cover (48,105,115) is constituted by an end section (48b), an external wall section (76) rising from the periphery of this end section (48b), an internal wall section (48a) covering the lower part of said terminal (44,45,46) and an entry (47,107,117); and
when said entry (47,107,117) is turned downward, a drain hole (97) for space between the internal wall section (48a) and the external wall section (76) is formed in the lower location.

## Patentansprüche

1. Hauptschalter für ein Fahrzeug des Typs, bei dem eine Leitungskopplereinrichtung (53) auf einen Anschluss (44, 45, 46) des Hauptschalters gesteckt wird, wobei:
der Anschluss (44, 45, 46) eine Isolierplatte (43, 104, 114) durchdringt;
ein Kontaktabschnitt (77, 83, 86) auf einer ersten Seite der Isolierplatte (43, 104, 114) vorgesehen ist und ein Anschlussabschnitt (78, 84, 87) auf einer entgegengesetzten zweiten Seite der Isolierplatte (43, 104, 114) vorgesehen ist,
**dadurch gekennzeichnet,**
**dass** der Anschluss (44, 45, 46) durch Presssitz an der Isolierplatte (43, 104, 114) befestigt ist, wobei eine Kontaktierungsrichtung zwischen der Leitungskopplereinrichtung (53) und dem Anschluss (44, 45, 46) von einer Durchdringungsrichtung des Anschlusses (44, 45, 46) durch die Isolierplatte (43, 104, 114) abweicht, und wobei der Anschlussabschnitt (78, 84, 87) eine durch eine Abdeckung (48, 105, 115) abgedeckte Bandplatte umfasst, wobei die Abdeckung (48, 105, 115) gegenüber einer Seitenendfläche (78a, 84a, 87a) des Anschlussabschnitts (78, 84, 87) einen Eingang (47, 107, 117) für die Leitungskopplereinrichtung (53) bereitstellt.

2. Hauptschalter für ein Fahrzeug gemäß Anspruch 1, wobei:
der Anschluss (44, 45, 46) in einer Querrichtung durch die Isolierplatte (43, 104, 114) abgestützt ist.

3. Hauptschalter für ein Fahrzeug gemäß Anspruch 1 oder 2, wobei:
die Abdeckung (48) mit entsprechenden Schlitzen (71, 72, 73) versehen ist, welche in einer Basis (48b) derselben ausgebildet sind zur Aufnahme und Abstützung in einer Querrichtung eines sich durch die Isolierplatte (43) hindurch erstreckenden Endes des Anschlusses (44, 45, 46).

4. Hauptschalter für ein Fahrzeug gemäß einem der Ansprüche 1 bis 3, umfassend:
einen Schalterkörper;
einen an dem Schalterkörper angebrachten Schloss-Außenzylinder (26, 103, 113, 123);
eine in diesem Schloss-Außenzylinder (26, 103, 113, 123) untergebrachte Kurbelwelle (32);
einen durch diese Kurbelwelle (32) abgesetzten und zurückgezogenen Verriegelungsstift (34);
ein Bewegungselement (41, 102, 112, 122), welches lösbar an einem unteren Teil der Kurbelwelle (32) angebracht ist, wobei das Bewegungselement (41, 102, 112, 122), das einen beweglichen Kontakt (42) besitzt, welcher mit dem Anschluss (44, 45, 46) durch Verschieben in Kontakt bringbar ist, durch die Isolierplatte (43, 104, 114) abgestützt ist;
eine Abdeckung (48, 105, 115) zur Abdeckung eines unteren Teils des Anschlusses (44, 45, 46), welcher die Isolierplatte (43, 104, 114) durchdringt;
einen an der Abdeckung (48, 105, 115) vorgesehenen Eingang (47, 107, 117) für eine Leitungskopplereinrichtung (53); und
mehrere Befestigungselemente (B1 bis B9) zur Anbringung der Abdeckung (48, 105, 115) und der Isolierplatte (43, 104, 114) in dem Schloss-Außenzylinder (26, 103, 113, 123), wobei:
das Bewegungselement (41, 102, 112, 122) so an der Kurbelwelle (32) angebracht ist, dass das Bewegungselement (41, 102, 112, 122), die Isolierplatte (43, 104, 114) und die Abdeckung (48, 105, 115) gemeinsam um einen vorbestimmten Winkel in der Drehrichtung der Kurbelwelle (32) gedreht werden können, in einem Zustand, in welchem die mehreren Befestigungselemente (B1 bis B9) gelöst sind und das Bewegungselement (41, 102, 112, 122) von der Kurbelwelle (32) gelöst ist.

5. Hauptschalter für ein Fahrzeug gemäß Anspruch 4, wobei:
die mehreren Befestigungselemente (B1 bis B9) Maschinenschrauben (B1 bis B9) sind.

6. Hauptschalter für ein Fahrzeug gemäß Anspruch 4 oder 5, wobei:
die Abdeckung (48, 105, 115) von einem Endabschnitt (48b), einem äußeren Wandabschnitt (76), welcher von dem Umfang dieses Endabschnitts (48b) aus ansteigt, einem inneren Wandabschnitt (48a), welcher den unteren Teil des Anschlusses (44, 45, 46) abdeckt, und einem Eingang (47, 107, 117) gebildet ist; und
wobei dann, wenn der Eingang (47, 107, 117) nach unten gedreht ist, ein Ableitungsloch (97) für einen Raum zwischen dem inneren Wandabschnitt (48a) und dem äußeren Wandabschnitt (76) an der unteren Position ausgebildet ist.

## Revendications

1. Interrupteur principal pour un véhicule du type dans lequel un connecteur de câbles (53) est inséré sur une borne (44, 45, 46) de l'interrupteur principal, dans lequel :
ladite borne (44, 45, 46) traverse une plaque isolante (43, 104, 114) ;
une section de contact (77, 83, 86) est prévue sur une première face de ladite plaque isolante (43, 104, 114) et une section formant borne (78, 84, 87) est prévue sur une seconde face opposée de ladite plaque isolante (43, 104, 114),
**caractérisé en ce que**
ladite borne (44, 45, 46) est fixée à la plaque isolante (43, 104, 114) par ajustement forcé, dans lequel une direction de mise en contact entre ledit connecteur de câbles (53) et ladite borne (44, 45, 46) est différente d'une direction de traversée de ladite borne (44, 45, 46) à travers ladite plaque isolante (43, 104, 114), et dans lequel ladite section formant borne (78, 84, 87) comprend une plaque formant bande qui est recouverte d'un couvercle (48, 105, 115), ledit couvercle (48, 105, 115) présentant un orifice d'entrée (47, 107, 117) pour le connecteur de câbles (53) opposé à une face d'extrémité latérale (78a, 84a, 87a) de ladite section formant borne (78, 84, 87).

2. Interrupteur principal pour véhicule selon la revendication 1, dans lequel :
ladite borne (44, 45, 46) est supportée dans une direction latérale par ladite plaque isolante (43, 104, 114).

3. Interrupteur principal pour véhicule selon la revendication 1 ou 2, dans lequel :
ledit couvercle (48) est muni d'encoches correspondantes (71, 72, 73) formées dans une partie de base (48b) de celui-ci pour recevoir et supporter dans une direction latérale une extrémité de ladite borne (44, 45, 46) qui s'étend à travers ladite plaque isolante (43).

4. Interrupteur principal pour véhicule selon l'une quelconque des revendications 1 à 3, comprenant :
un corps d'interrupteur ;
un cylindre externe de verrouillage (26, 103, 113, 123) fixé audit corps d'interrupteur ;
un vilebrequin (32) logé dans ce cylindre externe de verrouillage (26, 103, 113, 123) ;
un ergot de verrouillage (34) déposé et retiré par ce vilebrequin (32) ;
un élément mobile (41, 102, 112, 122) ajusté de façon amovible sur une partie inférieure dudit vilebrequin (32), ledit élément mobile (41, 102, 112, 122) ayant un contact mobile (42) qui peut être mis en contact coulissant avec ladite borne (44, 45, 46) en étant supporté par ladite plaque isolante (43, 104, 114) ;
un couvercle (48, 105, 115) pour couvrir une partie inférieure de la borne (44, 45, 46) qui traverse ladite plaque isolante (43, 104, 114) ;
un orifice d'entrée (47, 107, 117) pour un connecteur de câbles (53) présenté par ledit couvercle (48, 105, 115) ; et
plusieurs éléments de fixation (B1-B9) pour ajuster ledit couvercle (48, 105, 115) et ladite plaque isolante (43, 104, 114) dans ledit cylindre externe de verrouillage (26, 103, 113, 123), dans lequel :
l'élément mobile (41, 102, 112, 122) est ajusté sur le vilebrequin (32) afin que l'élément mobile (41, 102, 112, 122), la plaque isolante (43, 104, 114) et le couvercle (48, 105, 115) puissent être tournés ensemble d'un angle prédéterminé dans le sens de rotation du vilebrequin (32) dans un état dans lequel lesdits plusieurs éléments de fixation (B1-B9) sont détachés et l'élément mobile (41, 102, 112, 122) est démonté du vilebrequin (32).

5. Interrupteur principal pour véhicule selon la revendication 4, dans lequel :
lesdits plusieurs éléments de fixation (B1-B9) sont des vis de mécanique (B1-B9).

6. Interrupteur principal pour véhicule selon la revendication 4 ou 5, dans lequel :
ledit couvercle (48, 105, 115) est constitué d'une section d'extrémité (48b), d'une section de paroi externe (76) s'élevant depuis la périphérie de cette section d'extrémité (48b), d'une section de paroi interne (48a) couvrant la partie inférieure de ladite borne (44, 45, 46) et d'un orifice d'entrée (47, 107, 117) ; et
lorsque ledit orifice d'entrée (47, 107, 117) est tourné vers le bas, un trou d'écoulement (97) destiné à l'espace situé entre la section de paroi interne (48a) et la section de paroi externe (76) est formé en une position inférieure.
